# EUROPÄISCHE PATENTSCHRIFT

(11) **EP 1 517 072 B1**
(45) Veröffentlichungstag und Bekanntmachung des Hinweises auf die Patenterteilung: **19.09.2007**
(21) Anmeldenummer: 03021343.3
(22) Anmeldetag: 20.09.2003
(51) Int. Cl.: F16K 11/07

(54) **Ventil**
Valve
Vanne

(43) Veröffentlichungstag der Anmeldung: 23.03.2005
(73) Patentinhaber: Festo AG & Co., 73734 Esslingen (DE)
(72) Erfinder: Bogdanowicz, Grzegorz, 73760 Ostfildern (DE)
(74) Vertreter: Abel, Martin

(56) Entgegenhaltungen:
- CH-A- 393 015
- DE-A- 3 114 129
- DE-A- 3 839 424
- FR-A- 1 173 092
- GB-A- 1 333 468
- US-A- 3 680 596

## Beschreibung

Die Erfindung betrifft ein Ventil, mit einem Ventilgehäuse, das eine zur Aufnahme wenigstens eines Ventilsschiebers vorgesehene, umfangsseitig von einer Gehäusewand begrenzte länglich Gehäuseausnehmung aufweist, in die seitlich mindestens ein Ventilkanal einmündet und in der eine vom Ventilschieber durchsetzte Dichtungseinrichtung angeordnet ist, die mindestens eine Dichtungseinheit aufweist, die über einen ringförmigen Träger verfügt, der eine zur Abdichtung gegenüber dem Ventilschieber dienende ringförmige Innendichtung und eine in einer äußeren Ringnut angeordnete, zur Abdichtung gegenüber der Gehäusewand dienende ringförmige, gummielastische Außendichtung trägt, wobei der Träger im Bereich der äußeren Ringnut in zwei axial aufeinanderfolgende Trägerteile unterteilt ist, wobei ein erstes Trägerteil den Nutgrund und die eine, erste Nutflanke und ein zweites Trägerteil die andere, zweite Nutflanke der äußeren Ringnut definiert.

In der CH 393 015 ist ein Mehrweg-Steuerschieber beschrieben, der eine Dichtungseinrichtung besitzt, die ringförmige Innendichtungen zur Abdichtung gegenüber dem Ventilschieber und Außendichtungen zur Abdichtung gegenüber dem Gehäuse aufweist. Die Außendichtungen sitzen jeweils an einer Schrägfläche bzw. Fase verschiedener Ringe und werden beim Verspannen der Dichtungseinrichtung durch gegengelagerte Distanzringe gehalten.

In der US 3,680,596 ist ein Ventil offenbart, dass eine Dichtungseinrichtung besitzt, mit einem ringförmigen Träger, die O-Ringe tragen. Ferner sind zweite Trägerteile vorgesehen, die ihrerseits aus Kunststoff bestehen. Die Endabschnitte der zweiten Trägerteile besitzen einen Montageabschnitt und einen Dichtungsabschnitt, wobei der Montageabschnitt eine Schulter besitzt, die den Endbereich des ersten Trägerteils derart übergreift, das die auf dem ersten Trägerteil befindlichen Außendichtung gehalten, das heißt in ihrer axialen Position fixiert wird.

Ein aus der DE 34 08 182 C2 bekanntes Ventil besitzt eine in einer länglichen Gehäuseausnehmung angeordnete Dichtungseinrichtung, die sich aus mehreren axial beabstandeten Dichtungseinheiten zusammensetzt. Jede Dichtungseinheit verfügt über einen einstückigen, ringförmigen Träger, der am Innenumfang eine eine ringförmige Innendichtung aufnehmende innere Ringnut und am Außenumfang eine eine ringförmige Außendichtung aufnehmende äußere Ringnut aufweist. Die Innendichtung kooperiert mit einem die Dichtungseinheiten durchsetzenden, axial verstellbaren Ventilschieber. Die Außendichtung liegt unter Abdichtung an der nach radial innen orientieren Wandfläche der die Gehäuseausnehmung begrenzenden Gehäusewand an. Die Installation der einzelnen Dichtungseinheiten geschieht durch koaxiales Einschieben in die Gehäuseausnehmung bis zur gewünschten Stelle.

In die Gehäuseausnehmung münden seitlich mehrere Ventilkanäle ein. Werden die Dichtungseinheiten bei der Montage des Ventils in die Gehäuseausnehmung eingesteckt, gleiten daher die Außendichtungen einiger Dichtungseinheiten über die Kanalmündungen hinweg. Dies kann zu Beschädigungen der Außendichtung führen, sodass die gewünschte Dichtfunktion nicht mehr gewährleistet ist.

Eine vergleichbare Problematik liegt dem in der DE 41 01 059 C2 beschriebenen Ventil zugrunde. Dort sind allerdings die Dichtungseinheiten nicht als einzelne Komponenten ausgeführt, sondern zu einer hülsenartigen Baueinheit zusammengefasst.

In der DE 40 27 520 C2 wurde bereits vorgeschlagen, bei den zur Abdichtung zwischen dem Ventilschieber und dem Ventilgehäuse dienenden Dichtungseinheiten auf eine Außendichtung zu verzichten und statt dessen den Träger unter gleichzeitiger Herstellung eines Dichtkontaktes im Presssitz in der Gehäuseausnehmung festzulegen. Zur Gewährleistung der gleichzeitigen Dichtfunktion des Presssitzes erfordert die Herstellung der einzelnen Komponenten hier jedoch die Einhaltung sehr enger Toleranzen, was sich negativ auf die Gestehungskosten niederschlägt. Auch eignet sich diese Bauweise im Wesentlichen nur für metallische Ventilgehäuse, sodass man bei der Materialwahl eingeschränkt ist.

Es ist die Aufgabe der vorliegenden Erfindung, ein Ventil zu schaffen, das bei kostengünstiger Herstellung eine beschädigungsfreie Montage der Dichtungseinrichtung ermöglicht.

Zur Lösung dieser Aufgabe ist vorgesehen, dass an dem ersten Trägerteil eine sich über eine Rampenfläche in koaxialer Verlängerung an den Nutgrund anschließende Bereitstellungsfläche mit im Vergleich zum Nutgrund geringerem Durchmesser vorgesehen ist, die vom zweiten Trägerteil übergriffen wird, derart, dass eine auf der Bereitstellungsfläche platzierte Außendichtung beim axialen Zusammenfügen der beiden Trägerteile über die Rampenfläche hinweg unter radialer Aufweitung auf den Nutgrund verlagerbar ist.

Auf diese Weise kann die mindestens eine Dichtungseinheit bei der Montage des Ventils an der gewünschten Sollposition im Innern der Gehäuseausnehmung platziert werden, ohne dass dabei die Außendichtung von den Kanten der Kanalmündungen der in die Gehäuseausnehmung einmündenden Ventilkanäle beschädigt wird. Dadurch kann die Beschädigungsgefahr für die Außendichtung vermindert werden. Beim Einstecken des ersten Trägerteils in die Gehäuseausnehmung sitzt die Außendichtung auf der Bereitstellungsfläche und verfügt somit über einen geringeren Außendurchmesser als bei einer Platzierung auf dem Nutgrund der äußeren Ringnut. Man wird die Auslegung insbesondere so treffen, dass der Außendurchmesser der auf der Bereitstellungsfläche sitzenden Außendichtung geringfügig kleiner ist als der Innendurchmesser der Gehäuseausnehmung, sodass die Außendichtung beim Einstecken des ersten Trägerteils in die Gehäuseausnehmung nicht oder nur leicht mit der Gehäusewand in Kontakt gelangt. Erst wenn sich das erste Trägerteil in einer Stellung befindet, von der aus es nicht mehr über eine Kanalmündung hinweg bewegt werden muss, werden die beiden Trägerteile axial so zusammengefügt, dass die Außendichtung durch das zweite Trägerteil über die Rampe hinweg auf den Nutgrund verlagert wird, wobei die Außendichtung aufgeweitet und an die Wandfläche der Gehäusewand dicht angedrückt wird.

Die Ausgestaltung kann so getroffen werden, dass das erste Trägerteil mit auf der Bereitstellungsfläche platzierter Außendichtung unabhängig vom zugeordneten zweiten Trägerteil in der Gehäuseausnehmung platziert wird und erst anschließend das zweite Trägerteil angebracht wird. Möglich ist es aber auch, das zweite Trägerteil zusammen mit dem daran bereits in einer Ausgangsstellung vorfixierten zweiten Trägerteil in die Gehäuseausnehmung einzuführen, um dann die beiden Trägerteile vollends zusammenzufügen, damit die Außendichtung in den Bereich des einen größeren Durchmesser aufweisenden Nutgrundes verschoben wird.

Da bei dieser Bauweise die Dichtungseinheiten nicht zwingend im Presssitz in der Gehäuseausnehmung festgelegt werden müssen, besteht eine weitgehend freie Materialwahl für das Ventilgehäuse, sodass es insbesondere auch möglich ist, die Gehäusewand aus Kunststoffmaterial herzustellen.

Vorteilhafte Weiterbildungen der Erfindung gehen aus den Unteransprüchen hervor.

Wenn die Außendichtung unter radialer Vorspannung auf der Bereitstellungsfläche gehalten ist, bleibt der gewünschte Zusammenhalt während der Montagephase sicher gewährleistet.

Eine sichere Fixierung der Außendichtung auf der Bereitstellungsfläche kann dadurch begünstigt werden, dass die Bereitstellungsfläche eine zum Nutgrund konzentrische ringförmige Vertiefung bildet, in der die Außendichtung (auch) formschlüssig gehalten wird.

Bei einer besonders kostengünstigen Bauform ist die Außendichtung als O-Ring ausgeführt. Dieser gleitet beim Zusammendrücken der beiden Trägerteile besonders zuverlässig über die Rampe hinweg auf den Nutgrund der äußeren Ringnut.

Zweckmäßigerweise ist auch die ringförmige Innendichtung in einer Ringnut des Trägers gehalten. Dabei erstreckt sich die Unterteilung des Trägers zweckmäßigerweise auch auf die betreffende innere Ringnut, sodass beide Ringnuten bei voneinander entfernten Trägerteilen offen sind und die Dichtungen bequem montiert werden können.

Die Anzahl der Dichtungseinheiten orientiert sich an der Bauform und insbesondere an der Funktionalität des Ventils. Dementsprechend wird das Ventil in aller Regel mehrere koaxial mit Abstand zueinander angeordnete Dichtungseinheiten aufweisen. Diese sind bevorzugt so angeordnet, dass das zweite Trägerteil der jeweils einen Dichtungseinheit dem jeweils ersten Trägerteil der axial darauffolgenden Dichtungseinheit benachbart ist.

Die Montage mehrerer Dichtungseinheiten ist sehr einfach mit hoher Präzision möglich, wenn die axial benachbarten Trägerteile der Träger zweier aufeinanderfolgender Dichtungseinheiten gegenseitig axial abgestützt sind. Dieses Abstützen kann beispielsweise mittels den Abstand überbrückender Abstandshaltermittel geschehen oder durch die Zusammenfassung der betreffenden Trägerteile zu einer starren, insbesondere einstückigen Trägerteileinheit. Die Abstützmaßnahmen gewährleisten, dass die einzelnen Dichtungseinheiten einen vorbestimmten Abstand zueinander einhalten, der auf die Verteilung der Kanalmündungen der Ventilkanäle entlang der Gehäuseausnehmung abgestimmt ist.

Nachfolgend wird die Erfindung anhand der beiliegenden Zeichnung näher erläutert. In dieser zeigen:
- Figur 1: eine bevorzugte Ausführungsform des erfindungsgemäßen Ventils im Längsschnitt,
- Figur 2: den in Figur 1 strichpunktiert markierten Ausschnitt II in vergrößerter Darstellung,
- Figuren 3 bis 5: verschieden Phasen der Montage einer Dichtungseinheit in der Gehäuseausnehmung des Ventils und
- Figur 6: einen der Figur 2 entsprechenden Ausschnitt des Ventils aus Figur 1, das mit einer abgewandelten Bauform der Dichtungseinrichtung ausgestattet ist.

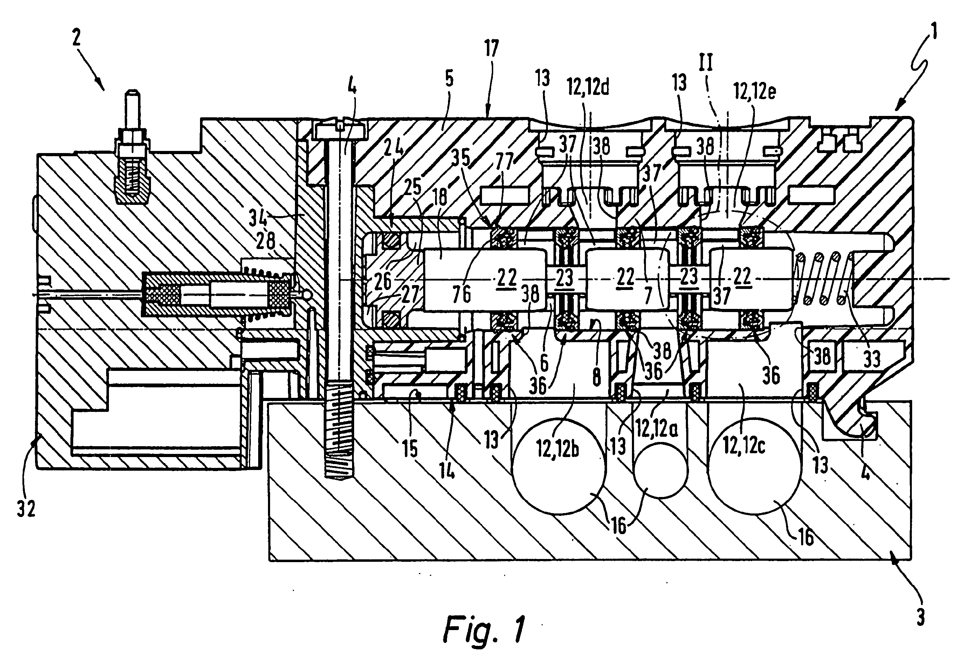

Die Figur 1 zeigt ein Ventil 1 als Bestandteil einer insgesamt mit Bezugsziffer 2 bezeichneten Ventilanordnung, die zusätzlich noch über einen bevorzugt plattenartig ausgebildeten Fluidverteiler 3 verfügt, auf dem das Ventil 1 lösbar, mittels geeigneten Befestigungsmitteln 4, befestigt ist.

Das Ventil 1 dient zur Steuerung von Fluidströmen und ist als Mehrwegeventil ausgeführt. Bei dem zu steuernden Medium handelt es sich insbesondere um Druckluft, wobei es sich allerdings auch um ein sonstiges gasförmiges oder hydraulisches Medium handeln kann.

Das Ventil 1 verfügt über ein Ventilgehäuse 5, in dem wenigstens eine sich linear erstreckende, längliche Gehäuseausnehmung 6 vorgesehen ist. Umfangsseitig ist die Gehäuseausnehmung 6 von einer Gehäusewand 7 des Ventilgehäuses 5 begrenzt.

Die Gehäusewand 7 und insbesondere das gesamte Ventilgehäuse 5 bestehen beim Ausführungsbeispiel aus Kunststoffmaterial. Die Herstellung erfolgt zweckmäßigerweise durch Spritzgießen, wobei ein Nachbearbeiten der die Gehäuseausnehmung 6 definierenden und nach radial innen orientierten Wandfläche 8 der Gehäusewand 7 nicht oder in nur geringem Maße erforderlich ist. Eine Bauform aus Metall wäre prinzipiell ebenfalls möglich.

In die Gehäuseausnehmung 6 münden im Bereich der Wandfläche 8 an mehreren in der Längsrichtung der Gehäuseausnehmung 6 beabstandeten Stellen Ventilkanäle 12 ein. Diese durchsetzen die Gehäusewand 7 und bilden an ihrem äußeren Ende Anschlussöffnungen 13. Drei dieser Anschlussöffnungen 13 münden zu einer außenliegenden Montagefläche 14 des Ventilgehäuses 5, mit der das Ventil 1 an eine Bestückungsfläche 15 des Fluidverteilers 3 angesetzt ist. In Letzterem verlaufen mehrere Fluidverteilerkanäle 16, die zur Bestückungsfläche 15 ausmünden und dort mit den Anschlussöffnungen 13 paarweise kommunizieren.

Zwei weitere der Anschlussöffnungen 13 münden an einer der Montagefläche 14 insbesondere entgegengesetzten Anschlussfläche 17 des Ventilgehäuses 5 und sind vorgesehen, das Anschließen nicht näher dargestellter Fluidleitungen zu ermöglichen, die zu einem anzusteuernden Verbraucher führen.

Bei dem Ventil 1 des Ausführungsbeispiels handelt es sich um ein 5/2-Wegeventil. Bei den zur Montagefläche 4 ausmündenden Ventilkanälen 12 handelt es sich um einen mittleren Speisekanal 12a, der axial beidseits von jeweils einem Entlüftungskanal 12b, 12c flankiert ist. Die beiden zur Abschlussfläche 17 führenden Ventilkanäle 12 sind Arbeitskanäle 12d, 12e.

Auf dem Fluidverteiler 3 können mehrere Ventile 1 positioniert sein, die jeweils zuordnungsrichtig mit den Fluidverteilerkanälen 16 verbunden sind.

In der Gehäuseausnehmung 6 findet sich ein länglicher kolbenartiger Ventilschieber 18. Er verfügt über mehrere Steuerabschnitte 22 größeren Durchmessers, zwischen denen jeweils ein Steuerabschnitt 23 kleineren Durchmessers platziert ist. Dem Ventilschieber 18 zugeordnete Betätigungsmittel 24 ermöglichen ein axiales Verlagern und Positionieren des Ventilschiebers 18 in der Gehäuseausnehmung 6 relativ zum Ventilgehäuse 5.

Die Betätigungsmittel 24 enthalten beim Ausführungsbeispiel einen mit dem Ventilschieber 18 einenends in Wirkverbindung stehenden Betätigungskolben 25. Dieser ist in einem als Betätigungsraum 26 bezeichneten Endabschnitt der Gehäuseausnehmung 6 unter Abdichtung verschiebbar geführt.

Der auf der dem Ventilschieber 18 entgegengesetzten Seite des Betätigungskolbens 25 liegende äußere Abschnitt 27 des Betätigungsraumes 26 kommuniziert auf nicht näher dargestellte Weise mit einem Steuerkanal 28, über den ein fluidisches Steuermedium wahlweise zugeführt oder abgeführt werden kann. Die entsprechende Steuerung übernimmt ein elektrisch aktivierbares Vorsteuerventil 32, das an das Ventilgehäuse 5 angebaut ist.

Vergleichbare Betätigungsmittel können auch dem entgegengesetzten Ende des Ventilschiebers 18 zugeordnet sein. Abweichend hiervon findet sich dort beim Ausführungsbeispiel allerdings nur eine Rückstellfeder 33, die zwischen dem Ventilgehäuse 5 und dem Ventilschieber 18 wirksam ist und den Ventilschieber 18 ständig in Richtung zum Betätigungskolben 27 beaufschlagt.

Im deaktivierten Zustand des Vorsteuerventils 32 nimmt der Ventilschieber 18, bedingt durch die Vorspannung der Rückstellfeder 33, die aus der Zeichnung ersichtliche erste Schaltstellung ein. Durch Aktivieren des Vorsteuerventils 32 wird der Betätigungskolben 25 und somit der Ventilschieber 18 unter gleichzeitiger Komprimierung der Rückstellfeder 33 nach rechts in eine zweite Schaltstellung verlagert.

Die Gehäuseausnehmung 6 ist an beiden Stirnseiten verschlossen. An wenigstens einer Stirnseite erfolgt der Verschluss durch einen lösbar am Ventilgehäuse 5 befestigten Verschlussdeckel 34. Im entfernten Zustand des Verschlussdeckels 34 ist die Gehäuseausnehmung 6 von der entsprechenden Stirnseite her zugänglich.

In der Gehäuseausnehmung 6 befindet sich eine zwischen dem Ventilschieber 18 und der Gehäusewand 7 wirksame Dichtungseinrichtung 35. Sie sitzt koaxial zwischen der Wandfläche 8 und dem Ventilschieber 18, wobei sie von letzterem koaxial durchsetzt wird.

Die Dichtungseinrichtung 35 enthält mindestens eine und in der Regel mehrere Dichtungseinheiten 36, von denen beim Ausführungsbeispiel fünf Stück vorhanden sind. Die Dichtungseinheiten 36 sind jeweils ringförmig ausgebildet. Die Dichtungseinheiten 36 sind so mit axialem Abstand in der Gehäuseausnehmung 6 angeordnet, dass einander jeweils benachbarte Dichtungseinheiten 36 einen Ausnehmungsabschnitt 37 der Gehäuseausnehmung 6 definieren, der mit einem der Ventilkanäle 12 in Verbindung steht. Die Ventilkanäle 12 münden mit Kanalmündungen 38 seitlich in die Gehäuseausnehmung 6 ein.

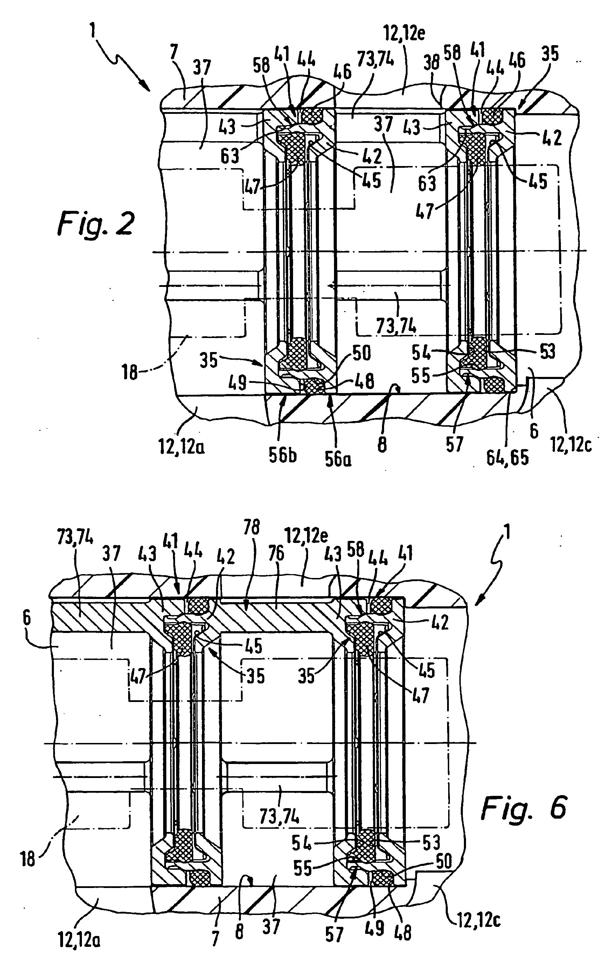

Wie insbesondere auch aus Figuren 2 und 6 hervorgeht, verfügen die einzelnen Dichtungseinheiten 36 jeweils über einen ringförmigen, formstabilen Träger 41, der sich aus zwei ringförmigen, koaxial zusammengefügten ersten und zweiten Trägerteilen 42, 43 zusammensetzt. Die beiden Trägerteile 42, 43 definieren gemeinsam jeweils eine zum Außenumfang hin offene äußere Ringnut 44 und eine zum Innenumfang hin offene innere Ringnut 45. In der äußeren Ringnut 44 sitzt konzentrisch eine ringförmige aus gummielastischem Material bestehende Außendichtung 46, insbesondere ein O-Ring, die mit Dichtkontakt an der Innenfläche der äußeren Ringnut 44 und an der Wandfläche 8 anliegt, um einen Fluiddurchgang zwischen der Gehäusewand 7 und dem Träger 41 zu verhindern.

In der inneren Ringnut 45 sitzt konzentrisch eine ringförmige, vorzugsweise ebenfalls aus gummielastischem Material bestehende Innendichtung 47. Diese steht in Dichtkontakt mit der Innenfläche der inneren Ringnut 45 und mit der Außenfläche des momentan durch die Dichtungseinheit 36 hindurchgreifenden Steuerabschnittes 22 größeren Durchmessers des Ventilschiebers 18.

Je nach Schaltstellung des Ventilschiebers 18 liegen einige Dichtungseinheiten 36 mit ihrer Innendichtung 47 dichtend über dem gesamten Umfang an einem Steuerabschnitt 22 größeren Durchmessers an, während andere Dichtungseinheiten 36 gleichzeitig im Bereich eines Steuerabschnittes 23 kleineren Durchmessers zu liegen kommen. Auf diese Weise wird eine Fluidverbindung zwischen benachbarten Ausnehmungsabschnitten 37 entweder unterbrochen oder freigegeben. Dadurch kann in an sich bekannter Weise eine Steuerung der Fluidströme zwischen den einzelnen Ventilkanälen 12 erfolgen.

Wie schon erwähnt, ist jeder Träger 41 unter Bildung der beiden Trägerteile 42, 43 im Bereich der äußeren Ringnut 44 und vorzugsweise auch der inneren Ringnut 45 in der Ringebene, d.h. rechtwinkelig zur Längsachse unterteilt. Bei beiden Ringnuten 44, 45 verläuft die Trennlinie so, dass die eine, erste Nutflanke 48, 53 sowie der Nutgrund 50, 55 der äußeren und inneren Ringnut 44, 45 am ersten Trägerteil 42 vorgesehen ist, während sich die andere, zweite Nutflanke 49, 54 der äußeren und inneren Ringnut 44, 45 am zweiten Trägerteil 43 befindet. Der Nutgrund 50 der äußeren Ringnut 44 ist nach radial außen orientiert, während der Nutgrund 55 der inneren Ringnut 45 nach radial innen weist.

Die beiden Trägerteile 42, 43 sind bevorzugt als koaxial zueinander angeordnete Ringteile ausgeführt. An beiden Trägerteilen 42, 43 befindet sich axial benachbart zur äußeren Ringnut 44 jeweils eine nach radial außen weisende umlaufende Abstützfläche 56a, 56b, die zur Abstützung des betreffenden Trägerteils 42, 43 an der nach radial innen orientierten Wandfläche 8 der Gehäusewand 7 dient. Die Außendichtung 46 übernimmt somit lediglich eine Dichtungsfunktion, während die Stabilisierung der Position der Dichtungseinrichtung 45 über die Abstützflächen 56a, 56b realisiert wird. Bevorzugt sind die Abstützflächen 56a, 56b so hinsichtlich ihrer Gestaltung auf den Querschnitt der Gehäuseausnehmung 6 abgestimmt, dass die Trägerteile 42, 43 im Wesentlichen spielfrei in die Gehäuseausnehmung 6 einschiebbar sind.

An dem ersten Trägerteil 42 ist eine zum Nutgrund 50 der äußeren Ringnut 44 koaxiale ringförmige Bereitstellungsfläche 57 vorgesehen, die dem vorgenannten Nutgrund 50 in Richtung zum zweiten Trägerteil 43 mit Abstand vorgelagert ist. Sie ist, wie auch der Nutgrund 50, nach radial außen orientiert, wobei sie einen im Vergleich zum Nutgrund 50 der äußeren Ringnut 44 geringeren Durchmesser besitzt. Den Übergang zwischen dem Nutgrund 50 und der Bereitstellungsfläche 57 bildet eine konzentrisch angeordnet ringförmige Rampenfläche 58, bei der es sich beispielsweise um eine konische Fläche handeln kann und die, im Querschnitt gesehen, ausgehend von der Bereitstellungsfläche 57 zum Nutgrund 50 hin ansteigt.

Somit ist an dem ersten Trägerteil 42 eine sich über eine Rampenfläche 58 in koaxialer Verlängerung an den Nutgrund 50 der äußeren Ringnut 44 anschließende Bereitstellungsfläche 57 vorgesehen. Diese wird, wie aus Figuren 2 und 6 gut ersichtlich ist, vom entsprechend geformten zweiten Tragteil 43 radial außen axial übergriffen.

Der Durchmesser des Nutgrundes 50 der Außendichtung 46 ist so auf die radialen Querschnittsabmessungen der Außendichtung 46 abgestimmt, dass diese, wenn sie in der äußeren Ringnut 44 sitzt, zwischen dem Nutgrund 50 und der Wandfläche 8 gequetscht wird, und somit ihrer Abdichtaufgabe nachkommt. Würde die Außendichtung 46 auch beim Einstecken einer Dichtungseinheit 36 in die Gehäuseausnehmung 6 in der äußeren Ringnut 44 sitzen, würde sie in unmittelbarem Kontakt zur Wandfläche 8 an dieser entlang gleiten und beim Überqueren einer Kanalmündung 38 in Kontakt mit deren Rändern gelangen. Da sich die Außendichtung 46 vorübergehend in die Kanalmündung 38 hinein ausdehnen würde, könnten beim Kontakt mit dem Mündungsrand Beschädigungen auftreten, die der gewünschten Abdichtfunktion abträglich wären.

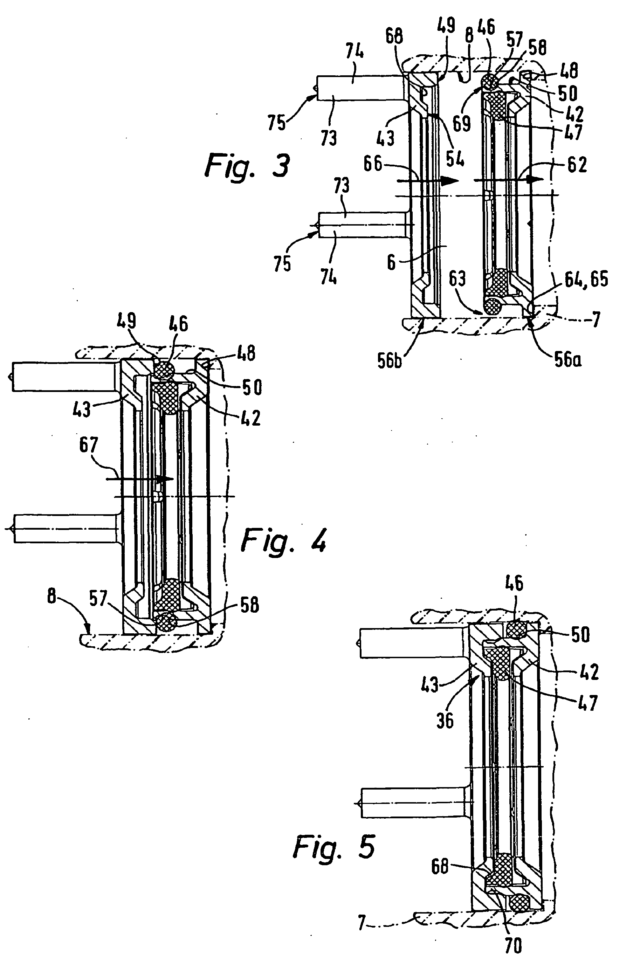

Um dies zu vermeiden ist die Unterteilung des Trägers 41 in die beiden Trägerteile 42, 43 sowie die dem Nutgrund 50 der Außendichtung 46 unter Zwischenschaltung der Rampenfläche 58 vorgelagerte Bereitstellungsfläche 57 vorgesehen. Damit verbunden ist die Möglichkeit zu einer einfachen, beschädigungsfreien und rationellen Montage der Dichtungseinrichtung 35 in der Gehäuseausnehmung 6, deren Ablauf anhand der Figuren 3 bis 5 deutlich wird.

Um eine Dichtungseinheit 36 an der vorgesehenen Stelle in der Gehäuseausnehmung 6 zu installieren, erfolgt eine gesonderte, aufeinanderfolgende Einführung des ersten und zweiten Trägerteils 42, 43 über eine offene Stirnseite der Gehäuseausnehmung 6 hinweg. Beim Ausführungsbeispiel geschieht die Montage bei entferntem Verschlussdeckel 34 durch die dann freigelegte stirnseitige Öffnung der Gehäuseausnehmung 6.

Zunächst wird gemäß Figur 5 das erste Trägerteil 42 gemäß Pfeil 62 in die Gehäuseausnehmung 6 eingeschoben, wobei zuvor die Außendichtung 64 konzentrisch auf der Bereitstellungsfläche 57 platziert worden ist. Da diese einen geringeren Durchmesser hat als der Nutgrund 50, wird die Außendichtung 46 nicht oder nur geringfügig radial gedehnt, sodass ihr Außendurchmesser geringer ist als der Innendurchmesser der Gehäuseausnehmung 6. Somit verbleibt zwischen der Außendichtung 46 und der Wandfläche 8 der Gehäuseausnehmung 6 ein Ringspalt 63, der beim Einschieben des zweiten Trägerteils 43 einen Kontakt zwischen der Außendichtung 46 und der Gehäusewand 7 und insbesondere mit den Rändern der Kanalmündungen 38 verhindert.

Damit die Außendichtung 46 verliersicher auf der Bereitstellungsfläche 57 gehalten ist, empfiehlt sich eine Abstimmung der Abmessungen derart, dass die Außendichtung 46 unter zumindest geringfügiger radialer Vorspannung auf der Bereitstellungsfläche 57 sitzt.

Beim Ausführungsbeispiel wird zusätzlich eine formschlüssige Fixierung dadurch erreicht, dass die Bereitstellungsfläche 57 in einer Weise geformt ist, dass sich eine zum Nutgrund konzentrische ringförmige Vertiefung 63 ergibt. In diese taucht die Außendichtung 46 mit einem Teil ihres Querschnittsumfanges formschlüssig ein.

Die Rampenfläche 58 kann gleichzeitig einen Teil der die Vertiefung 63 definierenden Fläche bilden.

Das mit der Außendichtung 46 bestückte erste Trägerteil 42 wird bis zur gewünschten Sollposition axial in die Gehäuseausnehmung 6 eingesteckt. Diese Sollposition wird beim Ausführungsbeispiel durch Abstützmittel 64 vorgegeben, die den Einschubweg des ersten Trägerteils 42 begrenzen. Für das erste Trägerteil 42 der zuerst zu installierenden Dichtungseinheit 36 sind die Abstützmittel 46 von einer Abstufung 65 der Gehäuseausnehmung 6 gebildet. An dieser stützt sich das erste Trägerteil 42 stirnseitig mit der der Bereitstellungsfläche 57 entgegengesetzten Stirnfläche ab.

Im nächsten Schritt wird das zu der Dichtungseinheit 36 gehörende zweite Trägerteil 43 gemäß Pfeil 66 ebenfalls in die Gehäuseausnehmung 6 eingeführt. Die zweite Nutflanke 49 ist dabei dem bereits eingesetzten ersten Trägerteil 42 zugewandt.

Wenn das zweite Trägerteil 43 das erste Trägerteil 42 erreicht hat und anschließend gemäß Pfeil 67 in Figur 4 weiter in Richtung des ersten Trägerteils 42 verschoben wird, drückt es mit der zweiten Nutflanke 49 auf die ihm koaxial gegenüberliegende, auf der Bereitstellungsfläche 57 sitzende Außendichtung 46. Bei diesem axialen Zusammenfügen der beiden Trägerteile 42, 43 wird die Außendichtung 46 vom zweiten Trägerteil 43 über die ansteigende Rampenfläche 58 hinweg unter radialer Aufweitung auf den sich anschließenden Nutgrund 50 verlagert. Das zweite Trägerteil 43 wird dabei insbesondere lösbar koaxial auf das erste Trägerteil 42 aufgesteckt. Der Montagevorgang ist beendet, wenn das zweite Trägerteil 43 mit einer dem ersten Trägerteil 42 zugewandten Anschlagfläche 68 am ersten Trägerteil 42 zur Anlage gelangt. Insbesondere trifft die Anschlagfläche 68 auf die Stirnfläche 69 eines die Bereitstellungsfläche 57 definierenden ringförmigen Fortsatzes 70 des ersten Trägerteils 42 auf.

Im bis zur gegenseitigen Anlage zusammengeschobenen Zustand liegt letztlich die aus Figur 5 ersichtliche Dichtungseinheit 36 vor. Dabei ist noch zu erwähnen, dass man selbstverständlich vor dem vollständigen Zusammenbau der beiden Trägerteile 42, 43 auch die Innendichtung 47 in der zugeordneten inneren Ringnut 45 platziert. Dies geschieht zweckmäßigerweise dadurch, dass man die Innendichtung 47 vor der Installation des ersten Trägerteils 42 in den am ersten Trägerteil 42 befindlichen Abschnitt der inneren Ringnut 45 einsetzt, die dann ja mangels vorhandener zweiter Nutflanke 54 axial zugänglich ist. In diesem Zusammenhang ist es von Vorteil, wenn sich der Nutgrund 55 der inneren Ringnut 45 zumindest teilweise am ersten Trägerteil 42 befindet. Die Innendichtung 47 kann dann in den am ersten Trägerteil 42 vorgesehenen Bestandteil der inneren Ringnut 45 eingesteckt werden, wobei sie darin durch kraftschlüssiges und/oder formschlüssiges Zusammenwirken mit dem zugeordneten Nutgrund 55 verliersicher gehalten ist.

Im fertig installierten Zustand der zuerst eingesetzten Dichtungseinheit 36 bildet diese ihrerseits Abstützmittel 64 zur axial korrekten Positionierung der als nächstes zu installierenden Dichtungseinheit. Beim Ausführungsbeispiel der Figuren 2 bis 5 ergibt sich die Abstützfunktion durch an dem zweiten Trägerteil 44 vorgesehene Abstandshaltemittel 73, die hier von mehreren stift- oder stabähnlich ausgebildeten Abstandshaltestreben 74 gebildet sind, die am zweiten Trägerteil 43 befestigt sind und sich ausgehend von diesem in der dem ersten Trägerteil 42 entgegengesetzten Axialrichtung erstrecken. Beim Ausführungsbeispiel sind mehrere über den Umfang des zweiten Trägerteils 43 verteilte Abstandshaltestreben 74 vorgesehen, die an der den zweiten Nutflanken 49, 54 entgegengesetzten Stirnseite des zweiten Trägerteils 43 insbesondere einstückig angeformt sind.

Die Abstandshaltestreben 74 überspannen den zwischen benachbarten Dichtungseinheiten 36 befindlichen Ausnehmungsabschnitt 37 der Gehäuseausnehmung 6, wobei auf Grund der zwischen ihnen vorgesehenen großen Abstände gleichwohl eine ungestörte fluidische Verbindung zwischen dem betreffenden Ausnehmungsabschnitt 37 und dem in diesen einmündenden Ventilkanal 12 gewährleistet ist.

Zur Installation einer zweiten Dichtungseinheit 36 wird deren mit der Außendichtung 46 vorbestücktes erstes Trägerteil 42 in die Gehäuseausnehmung 6 eingeschoben, bis es mit der den ersten Nutflanken 48, 53 entgegengesetzten Stirnseite an den Stirnflächen 75 der Abstandshaltestreben 74 der bereits installierten Dichtungseinheit 36 zur Anlage gelangt. Das erste Trägerteil 42 ist somit seinerseits gehäusefest abgestützt, sodass sich, in der schon geschilderten Weise, die Fertiginstallation durch Einsetzen des zugehörigen zweiten Trägerteils anschließen kann.

Dieser Vorgang wiederholt sich bis auch die letzte Dichtungseinheit 36 installiert ist. Allerdings verwendet man bei der letzten Dichtungseinheit 36 zweckmäßigerweise ein zweites Trägerteil 43, das keine Abstandhaltemittel 73 aufweist.

Wenn die Trägerteile 42, 43 wie beim Ausführungsbeispiel nicht selbstständig, zum Beispiel durch Einpressen, in der Gehäuseausnehmung 6 axial lagegesichert sind, empfehlen sich zusätzliche Sicherungsmaßnahmen, die den Zusammenhalt und die axial unveränderliche Position der Dichtungseinrichtung 35 gewährleisten. Diese Sicherungsmaßnahmen können beispielsweise durch ein Sicherungsteil 76 realisiert werden, das an der der Abstufung 65 entgegengesetzten Stirnseite der Dichtungseinrichtung 35 platziert und gehäusefest fixiert wird. Beim Ausführungsbeispiel übernimmt das zweite Trägerteil 43 der zuletzt installierten Dichtungseinheit 36 die Funktion eines solchen Sicherungsteils 76, indem es mit radial vorstehenden Verzahnungsmitteln 77 ausgestattet ist, die sich bei der Einsteckmontage in der Wandfläche 8 der Gehäusewand 7 kraft- und formschlüssig verkrallen.

Alternativ bestünde auch die Möglichkeit, ein gesondertes, bevorzugt ebenfalls ringförmiges Sicherungsteil 76 vorzusehen, das in einer der Dichtungseinrichtung 35 vorgelagerten Position in der Gehäuseausnehmung 6 installiert wird. Auf Grund seiner Ringform kann es problemlos vom Ventilschieber 18 durchsetzt werden.

Die Abstandshaltemittel 73 könnten auch bezüglich den Trägerteilen 42, 43 gesonderte Komponenten sein. Beispielsweise könnten sie Bestandteil eines käfigartigen Ringelementes sein, das zwischen jeweils aufeinanderfolgenden Dichtungseinheiten 36 eingesetzt wird.

Bei einer aus Figur 6 hervorgehenden Variante sind die bevorzugt strebenartigen Abstandshaltemittel 73 zu einer als Trägerteileinheit 78 bezeichneten Baueinheit mit den benachbarten Trägerteilen 43, 42 der beiden jeweils aufeinanderfolgenden Dichtungseinheiten 36 zusammengefasst. Bevorzugt handelt es sich dabei um eine einstückige Baueinheit. Auf Grund der Abstandshaltestreben 74 kann die Trägerteileinheit 78 einen käfigartigen Aufbau haben. Der Vorteil einer solchen Trägerteileinheit 78 besteht darin, dass gleichzeitig mit der Montage des zweiten Trägerteils 43 einer Dichtungseinheit 36 die Montage des bereits mit einer Außendichtung 46 vorbestückten ersten Trägerteils 42 der darauffolgenden Dichtungseinheit 36 vorgenommen werden kann.

Obgleich es prinzipiell möglich wäre, die Dichtungseinheiten 36 so zu installieren, dass die axial benachbarten Trägerteile zweier aufeinanderfolgender Dichtungseinheiten gleichartig ausgebildet sind, wird es als besonders vorteilhaft angesehen, die Anordnung so zu treffen, dass bei zwei axial aufeinanderfolgenden Dichtungseinheiten 36 jeweils ein erstes Trägerteil 42 der einen Dichtungseinheit 36 einem zweiten Trägerteil 43 der darauffolgenden Dichtungseinheit 36 benachbart ist. In der Längsrichtung der Dichtungseinrichtung 35 ergibt sich dadurch eine abwechselnde Aufeinanderfolge erster und zweiter Trägerteile 42, 43.

## Patentansprüche

1. Ventil mit einem Ventilgehäuse (5), das eine zur Aufnahme wenigstens eines Ventilschiebers (18) vorgesehene, umfangsseitig von einer Gehäusewand (7) begrenzte längliche Gehäuseausnehmung (6) aufweist, in die seitlich mindestens ein Ventilkanal (12) einmündet und in der eine vom Ventilschieber (18) durchsetzte Dichtungseinrichtung (35) angeordnet ist, die mindestens eine Dichtungseinheit (36) aufweist, die über einen ringförmigen Träger (41) verfügt, der eine zur Abdichtung gegenüber dem Ventilschieber (18) dienende ringförmige Innendichtung (47) und eine in einer äußeren Ringnut (44) angeordnete, zur Abdichtung gegenüber der Gehäusewand (7) dienende ringförmige, gummielastische Außendichtung (46) trägt, wobei der Träger (41) im Bereich der äußeren Ringnut (44) in zwei axial aufeinanderfolgende Trägerteile (42, 43) unterteilt ist, wobei ein erstes Trägerteil (42) den Nutgrund (50) und die eine, erste Nutflanke (48) und ein zweites Trägerteil (43) die andere, zweite Nutflanke (49) der äußeren Ringnut (44) definiert, **dadurch gekennzeichnet, dass** an dem ersten Trägerteil (42) eine sich über eine Rampenfläche (58) in koaxialer Verlängerung an den Nutgrund (50) anschließende Bereitstellungsfläche (57) mit im Vergleich zum Nutgrund (50) geringerem Durchmesser vorgesehen ist, die vom zweiten Trägerteil (42) übergriffen wird, derart, dass eine auf der Bereitstellungsfläche (57) platzierte Außendichtung (46) beim axialen Zusammenfügen der beiden Trägerteile (42, 43) über die Rampenfläche (58) hinweg unter radialer Aufweitung auf den Nutgrund (50) verlagerbar ist.

2. Ventil nach Anspruch 1, **dadurch gekennzeichnet, dass** der Innendurchmesser der Gehäuseabnehmung (6) größer ist als der Außendurchmesser der auf der Bereitstellungsfläche (57) sitzendend Außendichtung (46).

3. Ventil nach Anspruch 1 oder 2, **dadurch gekennzeichnet, dass** die Außendichtung (46) unter radialer Vorspannung auf der Bereitstellungsfläche (57) gehalten ist.

4. Ventil nach einem der Ansprüche 1 bis 3, **dadurch gekennzeichnet, dass** die Bereitstellungsfläche (57) eine zum Nutgrund (50) konzentrische ringförmige Vertiefung (63) definiert.

5. Ventil nach einem der Ansprüche 1 bis 4, **dadurch gekennzeichnet, dass** das zweite Trägerteil (43) koaxial lösbar auf das erste Trägerteil (42) aufgesteckt ist.

6. Ventil nach einem der Ansprüche 1 bis 5, **dadurch gekennzeichnet, dass** die Außendichtung (46) ein O-Ring ist.

7. Ventil nach einem der Ansprüche 1 bis 6, **dadurch gekennzeichnet, dass** die ringförmige Innendichtung (47) in einer inneren Ringnut (45) des Trägers (41) gehalten ist.

8. Ventil nach Anspruch 7, **dadurch gekennzeichnet, dass** sich die Unterteilung des Trägers (41) auch auf die innere Ringnut (45) erstreckt, wobei die innere Ringnut (45) einen Nutgrund (55), eine am ersten Trägerteil (42) vorgesehene erste Nutflanke(53) und eine am zweiten Trägerteil (43) vorgesehene zweite Nutflanke (54) aufweist.

9. Ventil nach Anspruch 8, **dadurch gekennzeichnet, dass** der Nutgrund (55) der inneren Ringnut (45) zumindest teilweise am ersten Trägerteil (42) vorgesehen ist, derart, dass die Innendichtung (47) bei entferntem zweitem Trägerteil (43) durch Zusammenwirken mit dem Nutgrund (55) an dem ersten Trägerteil (42) fixierbar ist.

10. Ventil nach einem der Ansprüche 1 bis 9, **dadurch gekennzeichnet, dass** die beiden Trägerteile (42, 43) zwei koaxial zueinander angeordnete Ringteile sind.

11. Ventil nach einem der Ansprüche 1 bis 10, **dadurch gekennzeichnet, dass** die Dichtungseinrichtung (35) mehrere koaxial mit Abstand zueinander angeordnete Dichtungseinheiten (36) aufweist.

12. Ventil nach Anspruch 11, **dadurch gekennzeichnet, dass** die Dichtungseinheiten (36) so angeordnet sind, dass das zweite Trägerteil (43) der jeweils einen Dichtungseinheit (35) dem ersten Trägerteil (42) der axial darauffolgenden Dichtungseinheit (36) benachbart ist.

13. Ventil nach Anspruch 11 oder 12, **dadurch gekennzeichnet, dass** die axial benachbarten Trägerteile (42, 43) der Träger (41) zweier jeweils aufeinanderfolgender Dichtungseinheiten (36) gegenseitig axial abgestützt sind.

14. Ventil nach einem der Ansprüche 11 bis 13, **dadurch gekennzeichnet, dass** sich zwischen den benachbarten Trägerteilen (42, 43) zweier aufeinanderfolgender Dichtungseinheiten (36) Abstandshaltemittel (73) erstrecken.

15. Ventil nach Anspruch 14, **dadurch gekennzeichnet, dass** die Abstandshaltemittel (73) strebenartig ausgebildet sind.

16. Ventil nach Anspruch 15, **dadurch gekennzeichnet, dass** die benachbarten Trägerteile (42, 43) zweier aufeinanderfolgender Dichtungseinheiten (36) zu einer starren Trägerteileinheit (78) zusammengefasst sind.

17. Ventil nach einem der Ansprüche 11 bis 16, **dadurch gekennzeichnet, dass** zwischen mehreren aufeinanderfolgenden Dichtungseinheiten (36) jeweils eine Kanalmündung (38) eines in die Gehäuseausnehmung (6) einmündenden Ventilkanals (12) vorgesehen ist.

18. Ventil nach einem der Ansprüche 1 bis 17, **dadurch gekennzeichnet, dass** die Gehäuseausnehmung (6) eine Abstufung (65) aufweist, an der sich die Dichtungseinrichtung (35) stirnseitig einenends abstützen kann.

19. Ventil nach Anspruch 18, **gekennzeichnet durch** ein die Dichtungseinrichtung (35) andernends stirnseitig abstützendes, ventilgehäusefest verankertes Sicherungsteil (76).

20. Ventil nach einem der Ansprüche 1 bis 19, **dadurch gekennzeichnet, dass** beide Trägerteile (42, 43) benachbart zur äußeren Ringnut (44) jeweils eine nach radial außen weisende, zur Abstützung an der nach radial innen orientierten Wandfläche (8) der Gehäusewand (7) dienende umlaufende Abstützfläche (56a, 56b) aufweisen.

21. Ventil nach einem der Ansprüche 1 bis 20, **dadurch gekennzeichnet, dass** die Rampenfläche (58) als konisch gestaltete Ringfläche ausgeführt ist.

## Claims

1. Valve with a valve casing (5), having an elongated casing recess (6) bounded on the peripheral side by a casing wall (7), provided to accommodate one or more valve spools (18), into which one or more valve passages (12) lead(s) from the side, and in which is fitted a sealing device (35) through which the valve spool (18) passes and which has at least one seal unit (36) with an annular support (41) carrying an annular inner seal (47) providing sealing against the valve spool (18) and an annular, rubber-elastic outer seal (46), located in an outer annular slot (44) and providing sealing relative to the casing wall (7), wherein the support (41) is divided in the area of the outer annular slot (44) into two axially consecutive support sections (42, 43), wherein a first support section (42) defines the slot base (50) and the one first slot side (48), and a second support section (43) defines the other second slot side (49) of the outer annular slot (44), **characterised in that** there is provided on the first support section (42) a preparation surface (57), adjoining the slot base (50) via a ramp surface (58) as a coaxial extension, with a smaller diameter than the slot base (50) and which is overlapped by the second support section (42) in such a way that an outer seal (46) placed on the preparation surface (57) may be displaced over the ramp surface (58), with radial expansion of the slot base (50), during axial joining of the two support sections (42, 43).

2. Valve according to claim 1, **characterised in that** the inside diameter of the casing recess (6) is greater than the outside diameter of the outer seal (46) resting on the preparation surface (57).

3. Valve according to claim 1 or 2, **characterised in that** the outer seal (46) is held on the preparation surface (57) under radial preload.

4. Valve according to any of claims 1 to 3, **characterised in that** the preparation surface (57) defines an annular recess (63) concentric with the slot base (50).

5. Valve according to any of claims 1 to 4, **characterised in that** the second support section (43) is slipped over the first support section (42) coaxially and releasably.

6. Valve according to any of claims 1 to 5, **characterised in that** the outer seal (46) is an O-ring.

7. Valve according to any of claims 1 to 6, **characterised in that** the annular inner seal (47) is held in an inner annular slot (45) of the support (41).

8. Valve according to claim 7, **characterised in that** the division of the support (41) also extends to the inner annular slot (45), wherein the inner annular slot (45) has a slot base (55), a first slot side (53) provided on the first support section (42), and a second slot side (54) provided on the second support section (43).

9. Valve according to claim 8, **characterised in that** the slot base (55) of the inner annular slot (45) is provided at least partly on the first support section (42) in such a way that, with the second support section (43) removed, the inner seal (47) may be fixed to the first support section (42) through interaction with the slot base (55).

10. Valve according to any of claims 1 to 9, **characterised in that** the two support sections (42, 43) are two annular sections arranged coaxially to one another.

11. Valve according to any of claims 1 to 10, **characterised in that** the sealing device (35) has several seal units (36) arranged coaxially with clearance between them.

12. Valve according to claim 11, **characterised in that** the seal units (36) are so arranged that the second support section (43) of the one seal unit (35) is adjacent to the first support section (42) of the axially consecutive seal unit (36).

13. Valve according to claim 11 or 12, **characterised in that** the axially adjacent support sections (42, 43) of the supports (41) of two consecutive seal units (36) give one another reciprocal axial support.

14. Valve according to any of claims 11 to 13, **characterised in that** spacer means (73) extend between the adjacent support sections (42, 43) of two consecutive seal units (36).

15. Valve according to claim 14, **characterised in that** the spacer means (73) are strut-like in form.

16. Valve according to claim 15, **characterised in that** the adjacent support sections (42, 43) of two consecutive seal units (36) are combined to form a rigid support section unit (78).

17. Valve according to any of claims 11 to 16 **characterised in that**, between several consecutive seal units (36), there is provided in each case a passage opening (38) of a valve passage (12) opening out into the casing recess (6).

18. Valve according to any of claims 1 to 17, **characterised in that** the casing recess (6) has a step (65) on which the end face of the sealing device (35) is able to rest at one end.

19. Valve according to claim 18, **characterised by** a securing part (76) anchored securely to the valve casing and supporting the end face of the sealing device (35) at the other end.

20. Valve according to any of claims 1 to 19, **characterised in that** both support sections (42, 43) have adjacent to the outer annular slot (44) in each case a continuous support surface (56a, 56b) facing radially outwards and serving to rest on the radially inwards oriented wall surface (8) of the casing wall (7).

21. Valve according to any of claims 1 to 20, **characterised in that** the ramp surface (58) is in the form of a conical annular surface.

## Revendications

1. Vanne avec un boîtier de vanne (5) qui comprend un logement allongé dans le boîtier (6) limité sur la circonférence d'une paroi de boîtier (7) prévu pour recevoir au moins un tiroir de vanne (18), dans lequel au moins un canal de vanne (12) débouche sur le côté et dans lequel est disposé un dispositif de joint d'étanchéité (35) traversé par un tiroir de vanne (18) qui comprend au moins une unité de joint d'étanchéité (36) qui dispose d'un support annulaire (41), qui supporte un joint d'étanchéité interne (47) annulaire servant d'isolation par rapport au tiroir de vanne (18) et un joint d'étanchéité externe (46) réalisé en caoutchouc, annulaire, servant d'isolation par rapport à la paroi de boîtier (7) et disposé dans une rainure annulaire externe (44), le support (41) étant divisé dans la zone de la rainure annulaire externe (44) en deux parties de support successives axiales (42, 43), une première partie de support (42) définissant le fond de rainure (50) et le premier flanc de rainure (48) et une seconde partie de support (43) définissant l'autre second flanc de rainure (49) de la rainure annulaire externe (49), **caractérisée en ce que**, sur la première partie de support (42), une surface de mise à disposition se raccordant via une surface de rampe (58) dans une prolongation coaxiale au fond de rainure (50) est prévue avec un diamètre inférieur au fond de rainure (50), laquelle surface est recouverte par la seconde partie de support (42), de sorte qu'un joint d'étanchéité externe (46) placé sur la surface de mise à disposition (57) peut être déplacé en cas d'assemblage axial des deux parties de support (42, 43) par-dessus la surface de rampe (58) dans un élargissement radial sur le fond de rainure (50).

2. Vanne selon la revendication 1, **caractérisée en ce que** le diamètre intérieur du creux du boîtier (6) est plus grand que le diamètre extérieur du joint d'étanchéité externe (46) reposant sur la surface de mise à disposition (57).

3. Vanne selon la revendication 1 ou 2, **caractérisée en ce que** le joint d'étanchéité externe (46) est maintenu par une précontrainte radiale sur la surface de mise à disposition (57).

4. Vanne selon l'une des revendications 1 à 3, **caractérisée en ce que** la surface de mise à disposition (57) définit un renfoncement (63) annulaire concentrique par rapport au fond de rainure (50).

5. Vanne selon l'une des revendications 1 à 4, **caractérisée en ce que** la seconde partie de support (43) est fixée de manière coaxiale et amovible sur la première partie de support (42).

6. Vanne selon l'une des revendications 1 à 5, **caractérisée en ce que** le joint d'étanchéité externe (46) est un joint torique.

7. Vanne selon l'une des revendications 1 à 6, **caractérisée en ce que** le joint d'étanchéité interne (47) circulaire est maintenu dans une rainure annulaire (45) interne du support (41).

8. Vanne selon la revendication 7, **caractérisée en ce que** la subdivision du support (41) s'étend également à la rainure annulaire (45) interne, la rainure annulaire (45) interne comprenant un fond de rainure (55), un premier flanc de rainure (53) prévu au niveau de la première partie de support (42) et un second flanc de rainure (54) prévu sur la seconde partie de support (43).

9. Vanne selon la revendication 8, **caractérisée en ce que** le fond de rainure (55) de la rainure annulaire (45) interne est prévu au moins en partie sur la première partie de support (42), de sorte que le joint d'étanchéité interne (47) peut être fixé, en cas de seconde partie de support (43) retirée, via une coopération avec le fond de rainure (55), à la première partie de support (42).

10. Vanne selon l'une des revendications 1 à 9, **caractérisée en ce que** les deux parties de support (42, 43) sont deux éléments annulaires disposés de manière coaxiale l'un par rapport à l'autre.

11. Vanne selon l'une des revendications 1 à 10, **caractérisée en ce que** le dispositif de joint d'étanchéité interne (35) comprend plusieurs unités de joint d'étanchéité (36) disposées de manière coaxiale à intervalle les uns des autres.

12. Vanne selon la revendication 11, **caractérisée en ce que** les unités de joint d'étanchéité (76) sont disposées de telle sorte que la seconde partie de support (43) d'une unité de joint d'étanchéité (35) est contiguë à la première partie de support (42) de l'unité de joint d'étanchéité (36) suivante axiale.

13. Vanne selon la revendication 11 ou 12, **caractérisée en ce que** les parties de support axiales contiguës (42, 43) des supports (41) s'appuient respectivement contre deux unités de joint d'étanchéité (36) successives.

14. Vanne selon l'une des revendications 11 à 13, **caractérisée en ce que** les moyens d'écartement (73) s'étendent entre les parties de support contiguës (42, 43) des deux unités de joint d'étanchéité (36) successives.

15. Vanne selon la revendication 14, **caractérisée en ce que** les moyens d'écartement (73) sont conçus sous forme d'entretoises.

16. Vanne selon la revendication 15, **caractérisée en ce que** les parties de support contiguës (42, 43) de deux unités de joint d'étanchéité (36) successives sont réunies en une unité de partie de support rigide (78).

17. Vanne selon l'une des revendications 11 à 16, **caractérisée en ce qu'**une ouverture de canal (38) d'un canal de vanne (12) débouchant dans le logement du boîtier est prévu entre plusieurs unités de joint d'étanchéité successives (36).

18. Vanne selon l'une des revendications 1 à 17, **caractérisée en ce que** le logement du boîtier (6) comprend une gradation (65), sur laquelle le dispositif de joint d'étanchéité (35) peut s'appuyer sur la face d'une extrémité.

19. Vanne selon la revendication 18, **caractérisée par** un élément de sécurité (76) ancré fixement au boitier de vanne et s'appuyant sur le dispositif de joint d'étanchéité (35) sur le côté au niveau de l'autre extrémité.

20. Vanne selon l'une des revendications 1 à 19, **caractérisée en ce que** les deux parties de support (42, 43) comprennent de façon contiguë à la rainure annulaire (44), respectivement, une surface d'appui (56a, 56b) rotative servant d'appui radial vers l'extérieur sur la surface de paroi orientée de manière radiale vers l'intérieur de la paroi de boîtier (7).

21. Vanne selon l'une des revendications 1 à 20, **caractérisée en ce que** la surface de rampe (58) forme une surface annulaire de forme conique.
